# DEMANDE DE BREVET EUROPEEN

(11) **EP 2 218 921 A1**
(43) Date de publication de la demande: **18.08.2010**
(21) Numéro de dépôt: 10305039.9
(22) Date de dépôt: 13.01.2010
(51) Int. Cl.: F16B 5/12, F16B 5/02

(54) **Système pour la fixation d'un premier élément sur un second élément**

(30) Priorité: 11.02.2009 FR 0950855
(71) Demandeur: Renault S.A.S., 92100 Boulogne-Billancourt (FR)
(72) Inventeur: Desprez, Sébastien, 78000 Versailles (FR); Szymanski, Joël, 78340 Les Clayes Sous Bois (FR)

(57) **Abrégé**

L'invention propose un système (10) pour à fixation d'un premier élément (12) sur un second élément (14) comportant :
- une articulation élastique (16) interposée entre les premier et second éléments (12, 14), qui comporte une doutée intérieure (18) recevant un axe (22) du premier élément, liée à un bloc (22) élastomère lié à une douille extérieure (24) qui est reçue dans une douille (26) de réception du second élément (14),
- un mandrin d'emmanchement (28) destiné à solliciter un bord supérieur (30) de la douille extérieure (24) jusqu'à une position butée d'emmanchement,

**caractérisé en ce que** le bord supérieur (30) de la douille extérieure (24) comporte au moins une collerette (32) percée de trois lumières (36), qui sont destinées à receveur des empreintes (40) conformes du mandrin (28), à permettre la sollicitation de la douille extérieure (24) parle mandrin (28) et à permettre la butée du mandrin (28) directement sur la douille (26) de réception.

## Description

L'invention concerne un système pour la fixation d'un premier élément sur un second élément.

L'invention concerne palus particulièrement un système pour la fixation et l'articulation d'un premier élément sur un second élément comportant :
- une articulation élastique interposée entre les premier et second éléments, qui comporte une douille intérieure, dont une alésage est destinée à recevoir un axe solidaire du premier élément, qui est liée par l'intermédiaire d'un bloc en matériau élastomère à une douille extérieure qui est destinée à être reçue dans une douille tubulaire de réception du second élément,
- un mandrin d'emmanchement destiné à solliciter un bord supérieur de la douille extérieure pour permettre l'introduction de ladite articulation dans la douille 26 tubulaire de réception du second élément 14 jusqu'à une position dite de butée d'emmanchement.

On connaît de nombreux exemptes de systèmes de fixation de ce type,

Un tel système présente, dans sa configuration la plus simple, de nombreux inconvénients.

Un tel système est notamment destiné à assurer une fonction dite "de saturation" dans laquelle la douille extérieure est susceptible d'entrer en appui directement sur le premier élément, limitant de ce fait les déplacements entre les premier et second éléments. La douille possède à cet effet généralement une collerette supérieure destinée à transmettre les efforts d'appui.

La tenue mécanique de la douille extérieure est donc primordiale pour ce type de système de fixation et d'articulation.

Afin: d'assurer la tenue mécanique de la collerette de la douille extérieure lors de l'emmanchement de l'articulation élastique dans la douille de réception du second élément, la douille extérieure est généralement d'une épaisseur élevée.

Cette épaisseur élevée conduit généralement à la formation de bourrelets de matière lors de l'emmanchement dans la douille de réception du second élément.

L'épaisseur de la douille extérieure ne peut être réduite, car elle conduirait à fragiliser la collerette, qui risquerait alors d'être cisaillée lors de l'emmanchement.

L'invention remédie à cet inconvénient en proposant une articulation élastique dont la douille extérieure peut être emmanchée dans la douille de réception sans risque de dégradation.

Dans ce but, l'invention propose un système du type décrit précédemment, caractérisé en ce que le bord supérieur de la douille extérieure comporte au moins une collerette qui s'étend sensiblement radialement au droit du second élément et qui comporte au moins trois lumières, réparties angulairement de manière régulière, traversant la collerette au droit de la douille de réception et débouchant dans une portée inférieure annulaire de la collerette, d'un premier diamètre déterminé, qui sont destinées à recevoir des empreintes conformes du mandrin, à permettre la sollicitation de la douille extérieure par le mandrin en cours d'emmanchement et à permettre la butée du mandrin directement sur la douille de réception du second élément en fin d'emmanchement pour déterminer la position dite de butée d'emmanchement, afin d'éviter le cisaillement de la collerette par le mandrin.

Selon d'autres caractéristiques de l'invention :
- la collerette comporte un bord inférieur annulaire d'un second diamètre déterminé, supérieur au premier diamètre déterminé de la portée inférieure, qui est destiné à reposer sur une face supérieure du second élément à l'extérieur de la douille de réception en position dite de butée d'emmanchement pour éviter le cisaillement de la collerette par la douille de réception,
- la douille de réception fait saillie selon un jeu déterminé au dessus de la surface supérieure du second élément et en ce que le bord inférieur de la douille extérieure est décalé axialement selon ledit jeu déterminé par rapport à la portée inférieure de la douille extérieure,
- la douille extérieure comporte quatre lumières oblongues s'étendant chacune selon un même secteur angulaire déterminé,
- les douilles intérieure et extérieure sont réalisées en un matériau plastique,
   D'autres caractéristiques et avantages de l'invention apparaîtront à la lecture de la description détaillée qui suit pour la compréhension de laquelle on se reportera aux dessins annexés dans lesquels ;
- la figure 1 est une vue en coupe d'un système selon l'invention selon un étant de la technique;
- la figure 2 est une vue en coupe illustrant un premier type de déformation du système de la figure 1 ;
- la figure 3 est une vue en coupe illustrant un second type de déformation du système de la figure 1 ;
- la figure 4 est une vue en coupe d'un système selon l'invention ;
- la figure 5 est une vue en perspective en perspective du système selon l'invention.

Dans la description qui va suivre, des chiffres de référence identiques désignent des pièces identiques ou ayant des fonctions similaires,

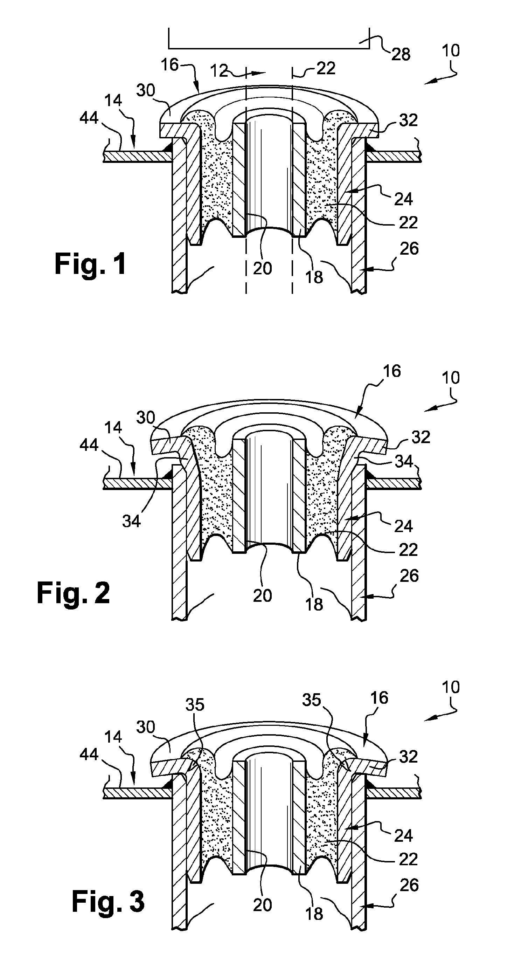

On a représenté aux figures 1 à 3 un Système 10 conventionnel pour la fixation d'un premier élément 12 sur un second élément 14, dit système 10 "à articulation élastique",

De manière connue, le système 10 comporte une articulation élastique 16 interposée entre les premier et second éléments 12, 14, qui comporte une douille intérieure 18, dont un alésage 20 est destinée a recevoir un axe 22 solidaire du premier élément 12, qui est liée par l'intermédiaire d'un bloc 22 en matériau élastomère à une douille extérieure 24 qui est destinée à être reçue dans une douille tubulaire 26 de réception du second élément 14.

Le système 10 comporte aussi un mandrin d'emmanchement 28, qui est destiné à solliciter un bord supérieur 30 de la douille extérieure 24 pour permettre de ladite articulation 16 dans la douille 26 tubulaire de réception du second élément 14 jusqu'à une position dite de butée d'emmanchement.

Dans un tel système, dans un cas dit "de saturation" de l'articulation 16, la douille extérieure 24 est susceptible d'entrer en appui directement sur le premier élément 12, limitant de ce fait les déplacements entre les premier et second éléments 12, 14.

La douille extérieure 24 possède à cet effet généralement une collerette 32 supérieure qui est destinée, à transmettre les efforts d'appui,

La tenue mécanique de la douille extérieure 24 est donc primordiale pour ce type de système de fixation et d'articulation.

Afin d'assurer la tenue de la collerette 32 de la douille extérieure lors de de l'articulation élastique dans la douille 26 de réception du second élément 14, la douille extérieure 24 est généralement d'une épaisseur élevée.

Comme l'illustre la figure 2, cette épaisseur élevée conduit généralement à la formation de bourrelets 34 de matière lors de l'emmanchement dans la douille 26 de réception du second élément 14.

L'épaisseur de la douille extérieure 24 ne peut être réduite, car elle conduirait à fragiliser la collerette 32, qui risquerait alors d'être cisaillée lors de l'emmanchement, comme représenté à la figure 3.

L'invention remédie à cet inconvénient en proposant une articulation élastique 16 dont la douille extérieure 24 peut être emmanchée dans la douille de réception 26 sans risque de dégradation.

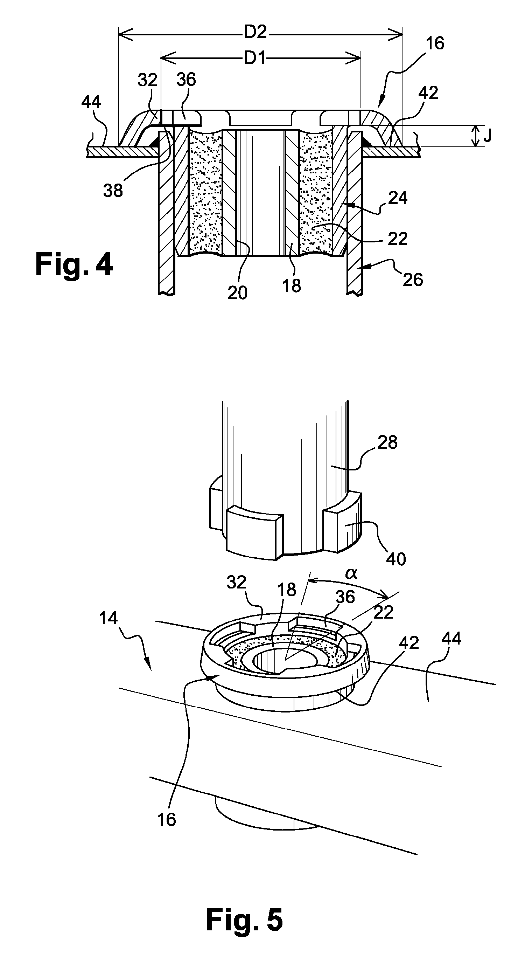

A cet effet, conformément à l'invention, comme l'illustrent les figures 5 et 6, le bord supérieur 30 de la douille extérieure 24 comporte au moins une collerette 32 qui s'étend sensiblement radialement au droit du second élément 14 et qui comporte au moins trois lumières 36, réparties angulairement de manière régulière, traversant la collerette 32 au droit de la douille 26 de réception et débouchant dans une portée inférieure 38 annulaire de la collerette 32 d'un premier diamètre "D1" déterminé,

Ces lumières 36 sont destinées à recevoir des empreintes conformes 40 du mandrin 28, à permettre la sollicitation de la douille extérieure 24 par le mandrin 28 en cours d'emmanchement et à permettre la butée du mandrin 28 directement sur la douille 26 de réception du second élément 14 en fin d'emmanchement pour déterminer la position dite de butée d'emmanchement.

Cette configuration permet donc avantageusement d'éviter le cisaillement de la collerette 32 par le mandrin 28 en fin de course, c'est-à-dire lorsque celui-ci pousse la douille extérieure 24 dans sa position de butée d'emmanchement.

Par ailleurs, la collerette 32 comporte un bord inférieur 42 annulaire d'un second diamètre "D2" déterminé, supérieur au premier diamètre "D1" déterminé de la portée inférieure 38, qui est destiné à reposer sur une face supérieure 44 du second élément 14 à l'extérieur de la douille 26 de réception dans la position dite de butée d'emmanchement de la douille extérieure 24.

Comme on peut le voir à la figuré 4, cet appui supplémentaire permet d'évier le de la collerette 32 par la douille 26 de réception.

Dans le mode de réalisation préféré de l'invention, mais de manière non limitative de celle-ci, la douille de réception fait saillie selon un jeu "J" déterminé au dessus de la surface supérieure 44 du second élément 14. De ce fait, le bord inférieur 42 de la douille extérieure 24 est décalé axialement selon ledit jeu "J" déterminé par rapport à la portée inférieure 38 de la douille extérieure 24.

Dans le mode de réalisation préféré de l'invention, la douille extérieure 24 comporte quatre lumières oblongues 36 s'étendant chacune selon un même secteur angulaire "α" déterminé. Ces lumières 36 sont destinées à coopérer avec quatre empreintes 40 conformes du mandrin 28. La forme de ces lumières 36 permet d'assurer un maximum de stabilité à l'assemblage du mandrin 28 et de la douille extérieure 24.

Enfin, il sera compris que les douilles intérieure 18 et extérieure 24 sont réalisées en un matériau plastique, ceci permettant notamment un moulage aisé de la collerette 32.

L'invention propose donc système 10 conventionnel pour la fixation d'un premier élément 12 sur un second élément 14, dit système 10 "à articulation élastique", comportant une articulation 16 robuste qui ne risque pas d'être détruite lors de son emmanchement.

## Revendications

1. Système (10) pour la fixation d'un premier élément (12) sur un second élément (14) comportant :
- une articulation élastique (16) interposée entre les premier et second éléments (12, 14), qui comporte une douille intérieure (18) dont un alésage (20) est destinée à recevoir un axe (22) solidaire du premier élément, qui est liée par l'intermédiaire d'un bloc (22) en matériau élastomère à une douille extérieure (24) qui est destinée à être reçue dans une douille (26) tubulaire de réception du second élément (14),
- un mandrin d'emmanchement (28) destiné à solliciter un bord supérieur (30) de la douille extérieure (24) pour permettre l'introduction de ladite articulation (16) dans la douille (26) tubulaire de réception du second élément (14) jusqu'à une position dite de butée d'emmanchement,
**caractérisé en ce que** le bord supérieur (30) de la douille extérieure (24) comporte au moins une collerette (32) qui s'étend sensiblement radialement au droit du second élément (14) et qui comporte au moins trois lumières (36), réparties angulairement de manière régulière, traversant la collerette (32) au droit de la douille (26) de réception et débouchant dans une portée inférieure annulaire (13) de la collerette d'un premier diamètre (D1) déterminé, qui sont destinées à recevoir des empreintes (40) conformes du mandrin (28), à permettre la sollicitation de la douille extérieure (24) par le mandrin (28) en cours d'emmanchement et à permettre la butée du mandrin (28) directement sur la douille (26) de réception du second élément (14) en fin d'emmanchement pour déterminer la position dite de butée d'emmanchement, afin d'éviter le cisaillement de la collerette (32) par le mandrin (28).

2. Système (10) selon la revendication précédente, **caractérisé en ce que** la collerette (32) comporte un bord inférieur (42) annulaire d'un second diamètre (D2) déterminé, supérieur au premier diamètre (D1) déterminé de la portée inférieure (38), qui est destiné à reposer sur une face supérieure (44) du second élément (14) à l'extérieur de la douille (26) de réception en position dite de butée d'emmanchement pour éviter le cisaillement de la collerette (32) par la douille (26) de réception.

3. Système (10) selon la revendication précédente, **caractérisé en ce que** la douille (26) de réception fait saillie selon un jeu (J) déterminé au dessus de la surface supérieure (44) du second élément (14) et **en ce que** le bord inférieur (42) de la douille extérieure (24) est décalé axialement selon ledit jeu (J) déterminé par rapport à la portée inférieure (28) de la douille extérieure (24).

4. Système (10) selon l'une des revendications précédentes, **caractérisé en que** la douille extérieure (24) comporte quatre lumières oblongues s'étendant chacune selon un même secteur angulaire (a) déterminé.

5. Système (10) selon l'une des revendications précédentes, **caractérisé en ce que** les douilles intérieure (18) et extérieure (24) sont réalisées en un matériau plastique.
